(19) Europäisches Patentamt
European Patent Office
Office européen des brevets

(11) EP 4 169 737 B1

(12) **EUROPEAN PATENT SPECIFICATION**

(45) Date of publication and mention of the grant of the patent:
**27.11.2024 Bulletin 2024/48**

(21) Application number: **22189220.1**

(22) Date of filing: **08.08.2022**

(51) International Patent Classification (IPC):
***B60C 1/00*** $^{(2006.01)}$ ***B60C 9/20*** $^{(2006.01)}$
***B60C 11/00*** $^{(2006.01)}$ ***B60C 9/22*** $^{(2006.01)}$

(52) Cooperative Patent Classification (CPC):
**B60C 1/0016; B60C 9/2009; B60C 11/0008;**
B60C 2009/2214; B60C 2009/2252;
B60C 2009/2285; B60C 2011/0016;
B60C 2011/0025; Y02T 10/86

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2021 JP 2021171916**

(43) Date of publication of application:
**26.04.2023 Bulletin 2023/17**

(73) Proprietor: **Sumitomo Rubber Industries, Ltd.**
**Kobe-shi, Hyogo 651-0072 (JP)**

(72) Inventors:
- **MISEKI, Yuta**
**Hyogo, 651-0072 (JP)**
- **SUZUKI, Masumi**
**Hyogo, 651-0072 (JP)**
- **MIKI, Takashi**
**Hyogo, 651-0072 (JP)**
- **OKABE, Noboru**
**Hyogo, 651-0072 (JP)**
- **MIAO, Dong**
**Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2019/133007** **JP-A- 2007 177 360**
**JP-A- 2008 050 408** **US-A1- 2020 369 086**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### BACKGROUND OF THE INVENTION

#### Field of the Invention

The present invention relates to a tire including a tread portion.

#### Background Art

Conventionally, a tire including a tread portion that has a tread rubber forming a ground-contact surface and a band layer disposed inward of the tread rubber in the tire radial direction, is known. For example, Japanese Laid-Open Patent Publication No. 2019-178294 proposes a tire including a jointless band in which cords made of an organic fiber are arranged.

However, with the improvements in vehicle performance and with the development of infrastructure such as expressways in recent years, even for the tire of Japanese Laid-Open Patent Publication No. 2019-178294, there has been room for further improvement in durability and ride comfort after high speed running. JP 2008-050408 A discloses a tire wherein a band layer arranged radially inward of the tread rubber includes band plies containing band cords made of polyethylene naphthalate, and the tread rubber has a glass transition temperature of -7°C or higher and contains 60% by weight or more of a high-Tg styrene-butadiene rubber. US 2020/0369086 A1 discloses a tire with a cap ply layer including a dip cord made of polyethylene terephthalate yarn which has a strength of 2.5 to 3.0 g/d when stretched by 5%. JP 2007-177360 A discloses tire cap ply cords made of polyester fibers which have an elongation of 5.0% or less at a load of 2.0 cN/dtex.

The present invention has been made in view of the above circumstances, and a main object of the present invention is to provide a tire that can improve durability and ride comfort after high speed running.

### SUMMARY OF THE INVENTION

The present invention is directed to a tire, as defined in claim 1, including a tread portion, wherein the tread portion includes a tread rubber forming a ground-contact surface, and a band layer disposed inward of the tread rubber in a tire radial direction, the band layer includes at least one band ply in which a band cord containing a polyester fiber is arranged, the band cord has a stress at 2.5% elongation of not less than 0.05 N/tex and not greater than 0.18 N/tex and a stress at 5.0% elongation of not less than 0.09 N/tex and not greater than 0.33 N/tex, the tread rubber contains styrene and is composed of a rubber composition having a glass transition temperature of not lower than -20°C, and a styrene amount in 100 parts by mass of a rubber component of the tread rubber is not greater than 25 parts by mass.

The tire of the present invention can improve durability and ride comfort after high speed running, by having such a tread rubber and such a band layer.

### BRIEF DESCRIPTION OF THE DRAWINGS

FIG. 1 is a cross-sectional view of a tire of an embodiment; and
FIG. 2 is a perspective view of a band layer of the embodiment.

### DETAILED DESCRIPTION

Hereinafter, an embodiment of the present invention will be described in detail with reference to the drawings.

FIG. 1 shows a tire meridional cross-sectional view, of a tire 1 of the present embodiment in a normal state, including the rotation axis of the tire 1. Here, in the case where the tire 1 is a pneumatic tire, the "normal state" is a state where the tire 1 is fitted on a normal rim and adjusted to a normal internal pressure and no load is applied to the tire 1. Hereinafter, unless otherwise specified, dimensions and the like of components of the tire 1 are values measured in the normal state.

If there is a standard system including a standard on which the tire 1 is based, the "normal rim" is a rim that is defined for each tire by the standard, and is, for example, the "standard rim" in the JATMA standard, the "Design Rim" in the TRA standard, or the "Measuring Rim" in the ETRTO standard. If there is no standard system including a standard on which the tire 1 is based, the "normal rim" is a rim having the smallest rim diameter and having the smallest rim width, among rims to which the tire 1 can be fitted and which do not cause air leakage.

If there is a standard system including a standard on which the tire 1 is based, the "normal internal pressure" is an air pressure that is defined for each tire by each standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the tire 1 is based, when the tire 1 is a tire for a passenger car, the "normal internal pressure" is 250 kPa.

The tire 1 of the present embodiment is suitably used as a tire for a passenger car. Here, in the present specification, the tire for a passenger car is a pneumatic tire that is designed to be mounted on an automobile running on four wheels and for which a normal load is not greater than 1000 kg.

The tire for a passenger car is not particularly limited as long as the normal load thereof is not greater than 1000 kg. From the viewpoint of suppressing excessive deformation in a tread portion 2, the normal load is preferably not greater than 900 kg, more preferably not greater than 750 kg, and further preferably not greater than 700 kg.

The "normal load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The tire 1 is not specified as a tire for a passenger car, and the present invention can be applied to various tires including pneumatic tires such as a heavy duty tire, a tire for a motorcycle, and a tire for racing, and a non-pneumatic tire the interior of which is not filled with pressurized air.

As shown in FIG. 1, the tire 1 of the present embodiment includes the tread portion 2 annularly extending, a pair of sidewall portions 3 extending on both sides of the tread portion 2, and a pair of bead portions 4 extending so as to be connected to the sidewall portions 3. The tire 1 also includes, for example, a toroidal carcass 6 extending on and between bead cores 5 of the pair of bead portions 4, and a belt layer 7 disposed outward of the carcass 6 in the tire radial direction and inward of the tread portion 2 in the tire radial direction, and has the following features.

The tread portion 2 of the present embodiment includes a tread rubber 2A forming a ground-contact surface 2a, and a band layer 8 disposed inward of the tread rubber 2A in the tire radial direction.

The tread rubber 2A of the present embodiment is composed of a rubber composition containing at least styrene. A styrene amount S in 100 parts by mass of a rubber component of the tread rubber 2A is preferably not greater than 25 parts by mass. The rubber composition for the tread rubber 2A of the present embodiment has a glass transition temperature of not lower than -20°C.

FIG. 2 is a perspective view of the band layer 8 of the present embodiment. As shown in FIG. 1 and FIG. 2, the band layer 8 of the present embodiment includes at least one band ply 8A in which a band cord 8a containing a polyester fiber is arranged. The band cord 8a preferably has a stress $\sigma 1$ at 2.5% elongation of not less than 0.05 N/tex and not greater than 0.18 N/tex and a stress $\sigma 2$ at 5.0% elongation of not less than 0.09 N/tex and not greater than 0.33 N/tex.

By having these features, the tire 1 of the present embodiment can improve durability and ride comfort after high speed running, and the mechanism for this is inferred as follows. However, the effects in the present embodiment are not bound by the following theory.

When the rubber component contains styrene in the range of not greater than 25 parts by mass, a domain by the styrene moiety in the rubber component is generated in the tread rubber 2A of the present embodiment. Accordingly, it is considered that the tire 1 allows impacts during running to be easily absorbed in the tread rubber 2A.

At the same time, when the amount of styrene in the tread rubber 2A is not greater than one-fourth of that of the rubber component, excessive softening of the rubber component due to heat during high speed running can be suppressed. Accordingly, it is considered that occurrence of flat spots on the surface of the tread portion 2 due to reaggregation of the styrene moiety when the tire 1 is cooled can be suppressed.

Moreover, when the glass transition temperature of the tread rubber 2A is set to be not lower than -20°C, the tread rubber 2A can easily exhibit rubber elasticity at room temperature and at high temperatures during high speed running, and can more easily absorb impacts transmitted to the tread portion 2.

Furthermore, the band layer 8 of the present embodiment contains a polyester fiber. Since the polyester fiber is a material having a higher glass transition temperature than conventionally used fibers such as nylon, softening of the band layer 8 of the present embodiment due to heat during high speed running is suppressed.

Accordingly, even when a centrifugal force is applied to the tire 1 during high speed running, the band layer 8 can exert a holding force, so that heat setting when the tire 1 is cooled after high speed running can be suppressed, and occurrence of flat spots on the ground-contact surface 2a of the tread portion 2 can be suppressed.

At the same time, when the stress $\sigma 1$ at 2.5% elongation of the band cord 8a is set to be in the range of not less than 0.05 N/tex and not greater than 0.18 N/tex, tension can be generated in the cord when the normal internal pressure is applied. In addition, when the stress $\sigma 2$ at 5.0% elongation of the band cord 8a is set to be in the range of not less than 0.09 N/tex and not greater than 0.33 N/tex, the holding force of the band layer 8 during high speed running can be increased, and the band layer 8 can be less likely to be stretched by centrifugal force.

Accordingly, in the tire 1, deformation of the tread portion 2 is suppressed, heat generation is reduced, and occurrence of heat setting and flat spots can be suppressed.

Due to the above, it is made easy to absorb impacts in the tread rubber 2A, and flat spots are made less likely to occur on both the tread rubber 2A and the band layer 8 after high speed running. Therefore, it is possible to maintain the roundness of the tire 1 even after high speed running, and deformation is uniform when the tire 1 is caused to run again, so that it is considered that it is possible to improve combined performance of durability and ride comfort.

Hereinafter, the tread rubber 2A of the present embodiment will be described in detail.

As described above, the tread rubber 2A of the present embodiment contains styrene in the rubber component. Examples of such a rubber component include styrene-butadiene rubber (SBR), styrene-isoprene rubber (SIR), styrene-isoprene-butadiene rubber (SIBR), and styrene-ethylene-butadiene copolymer.

Examples of other rubber components used for the tread rubber 2A include isoprene-based rubbers such as natural rubber (NR) and isoprene rubber (IR), and diene-based rubbers such as butadiene rubber (BR), chloroprene rubber (CR), acrylonitrile butadiene rubber (NBR), and isobutylene-isoprene-rubber (IIR).

The other rubber components may be used individually, or two or more of the other rubber components different from each other may be used in combination. As the other rubber component, from the viewpoint of forming a phase-separated structure in the rubber component and obtaining a styrene domain, at least either an isoprene-based rubber or BR is preferably used. Therefore, for the tread rubber 2A, the rubber component is preferably a combination of an isoprene-based rubber and SBR, a combination of SBR and BR, or a combination of an isoprene-based rubber, SBR, and BR.

For the tread rubber 2A, SBR is preferably used. For the tread rubber 2A, one SRB may be used alone, or two or more different SBRs may be used in combination.

As described above, the styrene amount S in 100 parts by mass of the rubber component of the tread rubber 2A is preferably not greater than 25 parts by mass. Such a tread rubber 2A can reduce the bonding by aggregation of the styrene component, so that occurrence of flat spots on the tread portion 2 can be suppressed. From such a viewpoint, the styrene amount S in 100 parts by mass of the rubber component of the tread rubber 2A is more preferably not greater than 20 parts by mass.

From the viewpoint of easily absorbing impacts during rolling in the tread rubber 2A, the styrene amount S in the rubber component of the tread rubber 2A is preferably not less than 5 parts by mass. The styrene amount S in the rubber component refers to the parts by mass of styrene in the rubber component of the tread rubber 2A, and styrene derived from components that can be extracted from the rubber composition by acetone, such as resin components, is excluded.

For example, for a rubber composition containing 50 parts by mass of SBR 1 (styrene content: 25%) and 10 parts by mass of SBR 2 (styrene content: 35%), the styrene amount S is calculated as 16 parts by mass by the following mathematical formula (1).

$$\{(25\times50)+(35\times10)\}/100 = 16 \qquad (1)$$

As understood from the mathematical formula (1), the styrene amount S in the rubber component can be adjusted as appropriate based on the amount of each rubber component having a styrene unit and the styrene amount in each rubber component having a styrene unit.

The amount of the SBR in 100 parts by mass of the rubber component used for the tread rubber 2A is, for example, preferably greater than 5 parts by mass, more preferably greater than 50 parts by mass, and further preferably not less than 55 parts by mass. On the other hand, as for the upper limit of the amount of the SBR, the amount of the SBR is preferably not greater than 100 parts by mass, more preferably not greater than 70 parts by mass, further preferably not greater than 65 parts by mass, and most preferably not greater than 60 parts by mass. When the amount of the SBR is set to be in such a range, the effects of the present embodiment are more easily achieved.

The weight-average molecular weight of the SBR is, for example, greater than 100 thousand and less than 2 million. The styrene content of the SBR is preferably greater than 5% by mass, more preferably greater than 10% by mass, and further preferably greater than 15% by mass. On the other hand, as for the upper limit of the styrene content of the SBR, from the viewpoint of heat generation properties and durability, the styrene amount of the SBR is preferably less than 50% by mass, more preferably less than 40% by mass, and further preferably less than 35% by mass.

The vinyl bond content (1,2-bond butadiene unit content) of the SBR is, for example, greater than 5% by mass and less than 70% by mass. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR, or may be a hydrogenated SBR in which the double bond of the butadiene moiety is hydrogenated.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of such a functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent.

As the modified SBR, for example, an SBR modified with a compound (modifier) represented by the following chemical formula 1 can be used.

[Chem. 1]

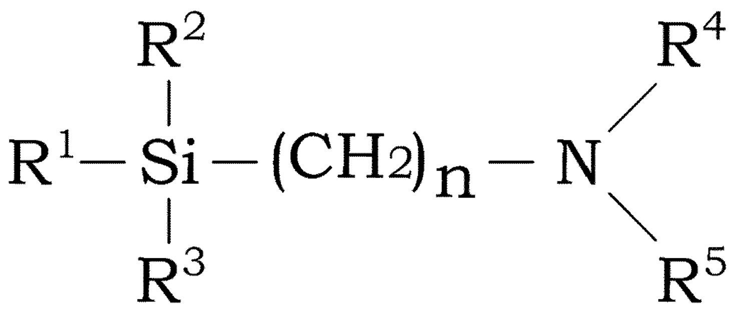

In the chemical formula 1, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

As the modified SBR modified with the compound (modifier) represented by the chemical formula, an SBR obtained by modifying the polymerization terminals (active terminals) of a solution-polymerized styrene-butadiene rubber (S-SBR) with the compound represented by the chemical formula can be used.

As $R^1$, $R^2$, and $R^3$, an alkoxy group (an alkoxy group preferably having 1 to 8 carbon atoms, more preferably 1 to 4 carbon atoms) is suitable. As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. One of these compounds may be used alone, or two or more of these compounds may be used in combination.

As the modified SBR, a modified SBR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl] sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophene, 4-N,N-diethylaminoacetophenone, 1,3-bis(diphenylamino)-2-propanone, and 1,7-bis(methylethylamino)-4-heptanone. Modification with this compound (modifier) can be carried out by a known method.

As the SBR, for example, SBRs manufactured by and available from SUMITOMO CHEMICAL COMPANY, LIMITED, JSR Corporation, Asahi Kasei Corporation, Zeon Corporation, etc., can be used.

The rubber composition used for the tread rubber 2A may further contain an isoprene-based rubber as necessary. In this case, from the viewpoint of obtaining good durability and low-heat generation properties during high speed running, the amount (total amount) of the isoprene-based rubber in 100 parts by mass of the rubber component is preferably not less than 5 parts by mass.

On the other hand, the upper limit of the amount of the isoprene-based rubber is not particularly limited, but, from the viewpoint of obtaining good ride comfort, the amount of the isoprene-based rubber is preferably not greater than 95 parts by mass, more preferably not greater than 80 parts by mass, further preferably not greater than 50 parts by mass, and most preferably not greater than 35 parts by mass. Examples of the isoprene-based rubber include natural rubber (NR), isoprene rubber (IR), reformed NR, modified NR, and modified IR.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. One of these rubbers may be used alone, or two or more of these rubbers may be used in combination.

The rubber composition used for the tread rubber 2A may further contain BR as necessary. In this case, from the viewpoint of wear resistance, the amount of the BR in 100 parts by mass of the rubber component is, for example, preferably greater than 5 parts by mass and more preferably greater than 10 parts by mass. On the other hand, the upper limit of the amount of the BR is not particularly limited, but the amount of the BR is preferably not greater than 95 parts by mass, more preferably less than 40 parts by mass, further preferably not greater than 30 parts by mass, and most preferably not greater than 20 parts by mass.

The weight-average molecular weight of the BR is, for example, greater than 100 thousand and less than 2 million. The vinyl bond content of the BR is, for example, greater than 1% by mass and less than 30% by mass. The cis content of the BR is, for example, greater than 1% by mass and less than 98% by mass. The trans content of the BR is, for example, greater than 1% by mass and less than 60% by mass.

The BR is not particularly limited, and a BR having a high cis content (a cis content of 90% or higher), a BR having a low cis content, a BR containing syndiotactic polybutadiene crystals, etc., can be used. The BR may be either an unmodified BR or a modified BR, and an example of the modified BR is a modified BR into which the aforementioned functional group is introduced. One of these BRs may be used alone, or two or more of these BRs may be used in combination. The cis content can be measured by infrared absorption spectrometry.

As the BR, for example, products of UBE Corporation, JSR Corporation, Asahi Kasei Corporation, Zeon Corporation, etc., can be used.

The rubber composition for the tread rubber 2A may also contain a rubber (polymer) generally used for producing the tire 1, such as nitrile rubber (NBR), as another rubber component.

In the present embodiment, the rubber composition for the tread rubber 2A preferably contains a filler. Specific examples of the filler include silica, carbon black, calcium carbonate, talc, alumina, clay, aluminum hydroxide, and mica. Among them, silica and carbon black can be preferably used as a reinforcing agent. In the case where silica is used, a silane coupling agent is preferably used together.

The rubber composition for the tread rubber 2A preferably contains silica. From the viewpoint of obtaining good durability, the BET specific surface area of the silica is preferably greater than 140 $m^2/g$ and more preferably greater than 160 $m^2/g$. On the other hand, from the viewpoint of obtaining good rolling resistance, the BET specific surface area of the silica is preferably less than 250 $m^2/g$ and more preferably less than 220 $m^2/g$. The BET specific surface area is a value of $N_2SA$ measured by the BET method according to ASTM D3037-93.

Moreover, from the viewpoint of obtaining good reinforcing properties and improving durability, the average primary particle diameter of the silica is preferably not greater than 22 nm and more preferably not greater than 18 nm. On the other hand, the lower limit of the average primary particle diameter of the silica is not particularly limited, but the average primary particle diameter of the silica is preferably not less than 10 nm. The average primary particle diameter of the silica can be calculated by calculating the area of each primary particle image of the silica observed with an electron microscope (TEM) or the like, from the rubber composition, and obtaining an average value from values approximated to the diameters of circles having the same areas.

In the case where silica is used as a filling reinforcing agent, from the viewpoint of obtaining good durability, the amount of the silica per 100 parts by mass of the rubber component is preferably greater than 35 parts by mass and more preferably greater than 40 parts by mass. On the other hand, the upper limit of the amount of the silica is not particularly limited, but the amount of the silica is preferably less than 200 parts by mass, more preferably less than 150 parts by mass, more preferably less than 70 parts by mass, more preferably less than 65 parts by mass, and further preferably less than 60 parts by mass.

Examples of the silica include dry-process silica (anhydrous silica) and wet-process silica (hydrous silica). As the silica, between them, wet-process silica is preferable for the reason that it has a higher silanol group content. As the silica, in addition to these silicas using hydrous silica or the like as a raw material, for example, silica using a biomass material such as rice husks as a raw material may be used.

As the silica, for example, products of Evonik Industries Ag, Rhodia, Tosoh Silica Corporation, Solvay Japan, Ltd., Tokuyama Corporation, etc., can be used.

The rubber composition for the tread rubber 2A preferably contains a silane coupling agent together with the silica. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. One of these silane coupling agents may be used alone, or two or more of these silane coupling agents may be used in combination.

As the silane coupling agent, for example, products of Evonik Industries Ag, Momentive Performance Materials, Inc., Shin-Etsu Silicones, Tokyo Chemical Industry Co., Ltd., AZmax.co, DuPont Toray Specialty Materials K.K., etc., can be used.

The amount of the silane coupling agent per 100 parts by mass of the silica is, for example, greater than 3 parts by mass and less than 25 parts by mass.

The rubber composition for the tread rubber 2A preferably contains carbon black. The amount of the carbon black per 100 parts by mass of the rubber component is, for example, greater than 1 part by mass and less than 200 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. One of these carbon blacks may be used alone, or two or more of these carbon

blacks may be used in combination.

The nitrogen adsorption specific surface area ($N_2SA$) of the carbon black is, for example, greater than 30 $m^2/g$ and less than 250 $m^2/g$. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. One of these carbon blacks may be used alone, or two or more of these carbon blacks may be used in combination.

In addition to the carbon black and the silica, the rubber composition for the tread rubber 2A may further contain fillers generally used in the tire industry, such as calcium carbonate, talc, alumina, clay, aluminum hydroxide, and mica. The amount of each of these fillers per 100 parts by mass of the rubber component is, for example, greater than 0.1 parts by mass and less than 200 parts by mass.

The rubber composition for the tread rubber 2A may contain an oil (including extender oil), a liquid rubber, and the like as a softener. The total amount of these softeners per 100 parts by mass of the rubber component is preferably greater than 5 parts by mass. As for the upper limit of the total amount, the total amount is preferably less than 70 parts by mass, more preferably less than 50 parts by mass, and further preferably less than 30 parts by mass. The amount of the oil incudes the amount of oil included in rubber (oil-extended rubber).

Examples of the oil include mineral oils (generally called process oils), vegetable fats and oils, and mixtures thereof. As the mineral oil (process oil), for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. As the oil, from the viewpoint of life cycle assessment, for example, machine oil that has been used as a lubricant for mixers for mixing, automobile engines, etc., waste cooking oil, etc., may be used as appropriate. One of these oils may be used alone, or two or more of these oils may be used in combination.

As the specific process oil (mineral oil), for example, products of Idemitsu Kosan Co., Ltd., Sankyo Yuka Kogyo K.K., ENEOS Corporation, Olisoy, H&R, Hokoku Corporation, Idemitsu Kosan Co.,Ltd., FUJI KOSAN COMPANY, LTD., etc., can be used.

The liquid rubber described as a softener is a polymer in a liquid state at room temperature (25°C), and is a polymer having a monomer similar to that of a solid rubber, as a component. Examples of the liquid rubber include a farnesene-based polymer, a liquid diene-based polymer, and hydrogenated products thereof.

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid diene-based polymer is, for example, a polymer having a weight-average molecular weight (Mw) of greater than $1.0\times10^3$ and less than $2.0\times10^5$, measured by gel permeation chromatography (GPC) in terms of polystyrene. In the present specification, the Mw of the liquid diene-based polymer is a value that is measured by gel permeation chromatography (GPC) and obtained by polystyrene conversion.

As the liquid rubber, for example, products of KURARAY CO., LTD., Cray Valley, etc., can be used.

The rubber composition for the tread rubber 2A preferably contains a resin component as necessary. The resin component may be solid or liquid at room temperature. Specific examples of the resin component include resin components such as styrene-based resins, coumarone-based resins, terpene-based resins, C5 resins, C9 resins, C5C9 resins, and acrylic-based resins, and two or more of these resin components may be used in combination. The amount of the resin component per 100 parts by mass of the rubber component is preferably greater than 2 parts by mass and less than 45 parts by mass, and more preferably less than 30 parts by mass.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and

methyl methacrylate; dienes such as chloroprene and butadiene isoprene; olefins such as 1-butene and 1-pentene; and α, β-unsaturated carboxylic acids or acid anhydrides thereof such as maleic anhydride.

As the coumarone-based resins, coumarone-indene resins are preferably used. The coumarone-indene resins are each a resin containing coumarone and indene as monomer components that form the backbone (main chain) of the resin. Examples of the monomer components contained in the backbone other than coumarone and indene include styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS-K0070: 1992).

The softening point of the coumarone-indene resin is, for example, higher than 30°C and lower than 160°C. The softening point is a softening point that is measured with a ring and ball softening point measuring device according to JIS-K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins.

Examples of the terpene phenols include resins obtained by copolymerization of a terpene compound and a phenolic compound, and resins obtained by hydrogenating the resins, and specific examples of the terpene phenols include resins obtained by condensation of the terpene compound, a phenolic compound, and formalin.

Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins.

The aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkyl styrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used.

As the aromatic vinyl-based resin, a homopolymer of α-methylstyrene or styrene or a copolymer of α-methylstyrene and styrene is preferable, and a copolymer of α-methylstyrene and styrene is more preferable, for the reasons that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Group Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) by avoiding use of a polymerization initiator, a chain transfer agent, an organic solvent, etc., which are sub-materials, as much as possible. In the present specification, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., ENEOS Corporation, Arakawa Chemical Industries, Ltd., Taoka Chemical Co., Ltd., etc., can be used.

The rubber composition for the tread rubber 2A preferably contains an antioxidant. The amount of the antioxidant per 100 parts by mass of the rubber component is, for example, greater than 1 part by mass and less than 10 parts by mass.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. One of these antioxidants may be used alone, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

The rubber composition for the tread rubber 2A may contain stearic acid. The amount of the stearic acid per 100 parts by mass of the rubber component is, for example, greater than 0.5 parts by mass and less than 10.0 parts by mass. As the stearic acid, a conventionally known one can be used, and, for example, products of NOF Corporation, Kao Corporation, FUJIFILM Wako Pure Chemical Corporation, New Japan Chemical Co., Ltd., etc., can be used.

The rubber composition for the tread rubber 2A may contain zinc oxide. The amount of the zinc oxide per 100 parts by mass of the rubber component is, for example, greater than 0.5 parts by mass and less than 10 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The rubber composition for the tread rubber 2A preferably contains a wax. The amount of the wax per 100 parts by mass of the rubber component is, for example, not less than 0.5 parts by mass, preferably not less than 1.0 part by mass, and more preferably not less than 1.5 parts by mass. As for the upper limit of the amount of the wax, the amount of the wax per 100 parts by mass of the rubber component is, for example, not greater than 20 parts by mass, preferably not greater than 15 parts by mass, and more preferably not greater than 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. One of these waxes may be used alone, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

The rubber composition for the tread rubber 2A preferably contains a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. One of these sulfurs may be used alone, or two or more of these sulfurs may be used in combination.

As the sulfur, for example, products of Tsurumi Chemical Industry Co., ltd., Karuizawa Sulfur Co., Ltd., SHIKOKU CHEMICALS CORPORATION, Flexsys, Nippon Kanryu Industry Co., Ltd., Hosoi Chemical Industry Co., Ltd., etc., can be used.

Examples of crosslinking agents other than the sulfur include vulcanizing agents containing sulfur atoms, such as TACKIROL V200 manufactured by Taoka Chemical Co., Ltd., DURALINK HTS (1,6-hexamethylene sodium dithiosulfate dihydrate) manufactured by Flexsys, and KA9188 (1,6-bis(N,N'-dibenzylthiocarbamoyldithio)hexane) manufactured by LANXESS, and organic peroxides such as dicumyl peroxide.

The rubber composition for the tread rubber 2A preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. One of these vulcanization accelerators may be used alone, or two or more of these vulcanization accelerators may be used in combination.

In addition to these components, additives generally used in the tire industry, such as fatty acid metal salts, carboxylic acid metal salts, and organic peroxides, may be further blended in the rubber composition for the tread rubber 2A. The amount of each of these additives per 100 parts by mass of the rubber component is, for example, greater than 0.1 parts by mass and less than 200 parts by mass.

The rubber composition for the tread rubber 2A preferably has a glass transition temperature Tg of not lower than -20°C. Such a tread rubber 2A can exhibit rubber elasticity at any temperature from room temperature to high temperature. Therefore, the tire 1 of the present embodiment can alleviate deformation of the tread portion 2 after high speed running, and can easily return the tread portion 2 to the original state, so that occurrence of flat spots on the tread portion 2 can be suppressed.

Moreover, such a tread rubber 2A can easily obtain damping properties during rolling at room temperature or higher, so that the ride comfort of the tire 1 after high speed running can be improved. Therefore, the tire 1 of the present embodiment can improve durability and ride comfort after high speed running.

Here, the glass transition temperature Tg of the rubber composition is determined as follows. First, a temperature distribution curve of tanδ is measured using EPLEXOR series manufactured by NETZSCH-Gerätebau GmbH, under conditions of a frequency of 10 Hz, an initial strain of 10%, an amplitude of ±0.5%, and a temperature increase rate of 2°C/min with stretch mode. Then, a tanδ peak temperature corresponding to the highest tanδ value in the measured temperature distribution curve is regarded as the glass transition temperature Tg. A rubber sample used when the glass transition temperature Tg is measured is taken from the tire 1 after vulcanization such that the longitudinal direction of the sample coincides with the circumferential direction of the tire 1.

The glass transition temperature Tg of the rubber composition can be adjusted as appropriate based on the glass transition temperature Tg of the rubber component and the type and amount of a plasticizer contained in the rubber composition. Specifically, the glass transition temperature Tg of the rubber composition can be increased by, for example, decreasing the amount of a rubber component having a low glass transition temperature Tg such as NR and BR contained in the rubber component and increasing the amount of a rubber component having a high glass transition temperature Tg such as SBR contained in the rubber component, or increasing the glass transition temperature Tg of the plasticizer and increasing the blending amount of the plasticizer. On the other hand, the glass transition temperature Tg of the rubber composition can be decreased by reversing these adjustments.

A loss tangent tanδ at 30°C of the tread rubber 2A is preferably not greater than 0.15, more preferably not greater than 0.13, and further preferably not greater than 0.11. Such a tread rubber 2A suppresses heat generation and serves to improve the durability and the ride comfort of the tread portion 2.

On the other hand, if the heat generation properties of the tread rubber 2A are excessively low, there is a possibility that grip performance cannot be sufficiently exhibited. From such a viewpoint, the loss tangent tanδ at 30°C of the tread rubber 2A is preferably not less than 0.06, more preferably not less than 0.07, and further preferably not less than 0.08.

A complex elastic modulus E* at 30°C of the tread rubber 2A is preferably not less than 4.5 MPa and more preferably not less than 5.3 MPa. On the other hand, as for the upper limit of the complex elastic modulus E* at 30°C of the tread rubber 2A, the complex elastic modulus E* is preferably not greater than 10.0 MPa and more preferably not greater than 7.6 MPa. Such a tread rubber 2A can improve steering stability and ride comfort in a well-balanced manner.

Here, the loss tangent tanδ and the complex elastic modulus E* at 30°C of the tread rubber 2A are values measured according to the standards of JIS-K6394 under the following conditions using a dynamic viscoelasticity measuring device (EPLEXOR series) manufactured by NETZSCH-Gerätebau GmbH. A rubber sample used when the loss tangent tanδ and the complex elastic modulus E* are measured is taken from the tire 1 after vulcanization such that the longitudinal direction of the sample coincides with the circumferential direction of the tire 1.

Initial strain: 5%
Amplitude of dynamic strain: ±1%
Frequency: 10 Hz

Deformation mode: tension
Measurement temperature: 30°C

The loss tangent tanδ and the complex elastic modulus E* at 30°C can be adjusted as appropriate based on the glass transition temperature Tg and the types and blending amounts of various ingredients of the tread rubber 2A. Specifically, the loss tangent tanδ can be increased by, for example, increasing the glass transition temperature Tg of the rubber composition, decreasing the average particle diameter of the reinforcing agent such as carbon black and silica, increasing the blending amount of the reinforcing agent, and decreasing the amount of the vulcanizing agent such as sulfur and an accelerator. The complex elastic modulus E* can be increased by, for example, increasing the glass transition temperature Tg of the rubber composition, decreasing the average particle diameter of the reinforcing agent such as carbon black and silica, increasing the blending amount of the reinforcing agent, decreasing the total amount of the plasticizer, and increasing the amount of the vulcanizing agent such as sulfur and an accelerator.
Next, the band layer 8 of the present embodiment will be described in detail.
The band layer 8 is preferably disposed outward of the belt layer 7 in the tire radial direction. As described above, the band layer 8 of the present embodiment includes at least the one band ply 8A in which the band cord 8a containing a polyester fiber is arranged. In such a band layer 8, a glass transition temperature Tg1 of the band cord 8a is high, so that heat setting of the band cord 8a can be suppressed even when heat is generated therein during high speed running.
Here, the polyester fiber is obtained by forming polyester into a fibrous form. The polyester means a polycondensate synthesized by performing dehydration condensation of a polyvalent carboxylic acid (dicarboxylic acid) and a polyalcohol (diol) to form ester bonds.
Examples of the polyester fiber of the band cord 8a include polyethylene terephthalate (PET) and polyethylene naphthalate (PEN). Such a band cord 8a serves to improve the durability and the ride comfort of the tire 1 after high speed running.
The band ply 8A is composed of, for example, a band cord 8a arranged at an angle of 5° or less with respect to the tire circumferential direction. The band ply 8A is preferably formed as a so-called jointless band in which one band cord 8a is helically wound in the tire circumferential direction.
As described above, the stress σ1 at 2.5% elongation of the band cord 8a is preferably not less than 0.05 N/tex and not greater than 0.18 N/tex. When the stress σ1 at 2.5% elongation of the band cord 8a is not less than 0.05 N/tex, in the case where the tire 1 is a pneumatic tire, tension is easily generated when the normal load is applied to the tire 1 in the normal state, so that the durability of the tire 1 after high speed running can be improved.
When the stress σ1 at 2.5% elongation of the band cord 8a is not greater than 0.18 N/tex, an excessive holding force can be suppressed, and the ride comfort of the tire 1 after high speed running can be improved. From such a viewpoint, the stress σ1 at 2.5% elongation of the band cord 8a is more preferably not less than 0.07 N/tex, and, as for the upper limit, is more preferably not greater than 0.15 N/tex.
As described above, the stress σ2 at 5.0% elongation of the band cord 8a is preferably not less than 0.09 N/tex and not greater than 0.33 N/tex. Such a band cord 8a can increase the holding force of the tire 1, is less likely to stretch even during high speed running, and serves to improve the durability and the ride comfort of the tire 1 after high speed running. From such a viewpoint, the stress σ2 at 5.0% elongation of the band cord 8a is more preferably not less than 0.11 N/tex and further preferably not less than 0.14 N/tex. On the other hand, as for the upper limit of the stress σ2 at 5.0% elongation of the band cord 8a, the stress σ2 is more preferably not greater than 0.28 N/tex and further preferably not greater than 0.21 N/tex.
Here, each of the stress σ1 at 2.5% elongation and the stress σ2 at 5.0% elongation of the band cord 8a is a value obtained by dividing the force at 2.5% or 5.0% elongation of the cord taken from the tire 1 by the total fineness of the cord. The test method for these stresses σ1 and σ2 is based on 8.6 Test method for load at constant elongation in JIS-L1017 Test methods for chemical fibre tire cords. The total fineness of the cord used in this case is calculated for the cord taken from the tire 1, by a method based on b) of 8.3 Fineness based on corrected weight in JIS-L1017.
The values of these stresses σ1 and σ2 can be adjusted based on the temperature and/or tension in a DIP treatment step during cord production. Specifically, the values of the stresses σ1 and σ2 can be increased by increasing the temperature in the DIP treatment step or the tension applied to the cord.
The stress σ2 at 5.0% elongation of the band cord 8a is preferably not less than 1.5 times the stress σ1 at 2.5% elongation. In addition, the stress σ2 at 5.0% elongation of the band cord 8a is preferably not greater than 2.5 times the stress σ1 at 2.5% elongation. Such a band cord 8a serves to improve the durability of the tire 1 after high speed running.
As shown in FIG. 1 and FIG. 2, the product (σ2×S) of the stress σ2 at 5.0% elongation (N/tex) of the band cord 8a and the styrene amount S (parts by mass) in 100 parts by mass of the rubber component of the tread rubber 2A of the present embodiment is not less than 2.7 and not greater than 8.0. Generally, if the styrene amount of the tread rubber 2A is low, heat generation during high speed running is suppressed and the hoop effect of the band cord 8a tends to be less likely to be exhibited.

In the tread portion 2 of the present embodiment, by specifying the product ($\sigma 2 \times S$) of the stress $\sigma 2$ at 5.0% elongation of the band cord 8a and the styrene amount S of the tread rubber 2A, stretch of the band cord 8a when heat generation of the tread rubber 2A is low is suppressed, and both durability and low heat generation of the tire 1 during high speed running are achieved in a well-balanced manner.

The product ($\sigma 1 \times \tan\delta$) of the stress $\sigma 1$ at 2.5% elongation (N/tex) of the band cord 8a and the loss tangent $\tan\delta$ at 30°C of the tread rubber 2A of the present embodiment is not greater than 0.02. Such a tread portion 2 can prevent heat from being transmitted from the tread rubber 2A to the band cord 8a while maintaining good ride comfort, so that the durability of the tire 1 after high speed running can be improved.

From such a viewpoint, the product ($\sigma 1 \times \tan\delta$) of the stress $\sigma 1$ at 2.5% elongation (N/tex) of the band cord 8a and the loss tangent $\tan\delta$ at 30°C of the tread rubber 2A is preferably not greater than 0.017, more preferably not greater than 0.015, and further preferably not greater than 0.013.

A thermal shrinkage stress $\sigma 3$ at 100°C of the band cord 8a of the present embodiment is not less than 0.01 N/tex. Such a band cord 8a can inhibit the high-temperature band code 8a after high speed running from becoming stretched, so that occurrence of flat spots on the tread portion 2 can be suppressed.

Here, the thermal shrinkage stress $\sigma 3$ of the band cord 8a is a value that is measured at 100°C for 2 minutes for the cord taken from the tire 1, in accordance with the test method of ASTM D5591, after the band cord 8a to be measured is fixed at an initial load of 20 g/cord with a length of 25 cm.

The thermal shrinkage stress $\sigma 3$ of the band cord 8a can be adjusted based on the temperature and/or tension in the DIP treatment step during cord production. Specifically, the thermal shrinkage stress $\sigma 3$ can be increased by increasing the temperature in the DIP treatment step or increasing the tension applied to the cord.

A value ($S/\sigma 3$) obtained by dividing the styrene amount S (parts by mass) in 100 parts by mass of the rubber component of the tread rubber 2A by the thermal shrinkage stress $\sigma 3$ at 100°C (N/tex) of the band cord 8a of the present embodiment is not greater than 1000. In such a tread portion 2, the thermal shrinkage stress $\sigma 3$ of the band cord 8a when heat generation of the tread rubber 2A is low is increased, and both durability and low heat generation of the tire 1 during high speed running are achieved in a well-balanced manner.

As shown in FIG. 2, the band ply 8A preferably includes a topping rubber 8b covering the band cord 8a. Examples of the rubber component of the topping rubber 8b include isoprene-based rubbers, butadiene-based rubbers, styrene-butadiene rubber, nitrile rubber, and isobutylene-isoprene-rubber.

The total thickness of the band layer 8 in which the band cord 8a is covered with the topping rubber 8b is preferably not less than 0.60 mm and not greater than 0.80 mm.

A total fineness D of the band cord 8a is preferably not less than 1500 dtex and not greater than 3500 dtex. Such a band cord 8a serves to improve the durability and the ride comfort of the tire 1 after high speed running. From such a viewpoint, the total fineness D of the band cord 8a is more preferably not less than 2000 dtex and not greater than 3000 dtex.

The band cord 8a is, for example, a twisted wire obtained by twisting together a plurality of filament yarns 8c. Each filament yarn 8c may be, for example, a monofilament yarn made of a single fiber, or may be a multifilament yarn made of a plurality of fine fibers. The band cord 8a of the present embodiment is obtained by twisting together two multifilament yarns made of polyester fibers.

The band cord 8a of the present embodiment is composed of only polyester fibers. Here, "the cord is composed of only polyester fibers" indicates that a component performing the function of the cord is composed of only polyester fibers and contains no other fibers, but does not exclude the inclusion of incidental components (for example, an adhesive, etc.).

The band cord 8a may be a so-called hybrid cord obtained by twisting together a first filament yarn made of a polyester fiber and a second filament yarn made of another fiber, for example, a nylon fiber. In this case, each of the first filament yarn and the second filament yarn may be a monofilament yarn or a multifilament yarn.

In this case, a fineness D1 of the first filament yarn is preferably greater than a fineness D2 of the second filament yarn. The fineness D1 of the first filament yarn is, for example, not less than 101% and not greater than 105% of the fineness D2 of the second filament yarn. Such a band cord 8a can be expected to have an excellent cost reduction effect.

A number of twists N1 per 100 mm of cord for the band cord 8a is preferably not less than 20 and not greater than 60. Such a band cord 8a serves to improve the durability and the ride comfort of the tire 1 after high speed running. From such a viewpoint, the number of twists N1 per 100 mm of cord for the band cord 8a is more preferably not less than 30 and not greater than 50.

A twist coefficient Nd, of the band cord 8a of the present embodiment, which is a value obtained by multiplying a number of twists N2 per 10 mm of cord for the band cord 8a by the square root of the total fineness D (dtex) is not less than 200. The stress acting on such a band cord 8a in a stretched state is decreased, so that occurrence of flat spots can be more reliably suppressed, and the durability of the tire 1 after high speed running can be improved.

In the band ply 8A, ends which represent the number of cords per 5 cm of ply width in a cross-section orthogonal

to the longitudinal direction of the band cord 8a are preferably not less than 40 and not greater than 60. Such a band ply 8A serves to improve the durability and the ride comfort of the tire 1 after high speed running.

As shown in FIG. 1, the carcass 6 is composed of, for example, one carcass ply 6A. The carcass ply 6A includes carcass cords and a topping rubber covering the carcass cords. The carcass cords are, for example, arranged so as to be tilted at an angle of not less than 75° and not greater than 90° with respect to the tire circumferential direction. As each carcass cord, for example, a cord made of an organic fiber such as nylon, polyester, or rayon is suitably used.

The carcass ply 6A includes, for example, a body portion 6a and turned-up portions 6b. The body portion 6a preferably extends from the tread portion 2 through each sidewall portion 3 to the bead core 5 of each bead portion 4. Each turned-up portion 6b, for example, is connected to the body portion 6a, is turned up around the bead core 5 from the inner side to the outer side in the tire axial direction, and extends outward in the tire radial direction. For the carcass ply 6A, for example, a so-called ultra-highly turned-up structure in which an end portion of each turned-up portion 6b extends to between the body portion 6a and the belt layer 7 may be employed.

The belt layer 7 includes, for example, two belt plies 7A and 7B. Each of the belt plies 7A and 7B includes, for example, belt cords arranged so as to be tilted relative to the tire circumferential direction, and a topping rubber covering the belt cords. Each belt cord is preferably tilted at an angle of not less than 10° and not greater than 45° with respect to the tire circumferential direction.

Although the particularly preferred embodiments of the present invention have been described in detail above, the present invention is not limited to the above-described embodiments, and various modifications can be made to implement the present invention.

## EXAMPLES

Based on each of blending formulas 1 to 10 shown in Table 3 and Table 4, a kneaded product was obtained by kneading the materials other than sulfur and vulcanization accelerators under a condition of 140°C for 5 minutes by using a Banbury mixer. The sulfur and the vulcanization accelerators were added to the obtained kneaded product, and the mixture was kneaded under a condition of 80°C for 5 minutes by using an open roll, to obtain an unvulcanized rubber composition.

Tires having the basic structure shown in FIG. 1 and FIG. 2 were produced as test tires based on specifications in Table 1 and Table 2, by molding a tread rubber using the obtained unvulcanized rubber composition, placing the tread rubber together with other tire members, and performing vulcanization molding. Using the produced test tires, durability and ride comfort after high speed running were tested. Common specifications and test methods are as follows.

### <Common Specifications>

Tire size: 215/60R16
Rim size: 16×6.5J
Air pressure: 210 kPa

### <Durability After High Speed Running>

The produced test tires were mounted to all the wheels of a front-wheel-drive car made in Japan (an engine displacement of 2 L), the car was caused to run at 100 km/h for 1 hour, and the tires were allowed to stand for at least 24 hours. Then, the tires were each mounted to a drum tester, and in a state where a vertical load of 5.88 N was applied to the tire, the speed was gradually increased in steps of 10 km/h from 180 km/h, and the time until the tire became damaged was measured. The results are represented as indexes with the result of Comparative Example 1 being regarded as 100. A higher value indicates that the time until the tire becomes damaged is longer and that the durability after high speed running is better.

### <Ride Comfort After High Speed Running>

The produced test tires were mounted to all the wheels of a front-wheel-drive car made in Japan (an engine displacement of 2 L), the car was caused to run at 100 km/h for 1 hour, and the tires were allowed to stand for at least 24 hours. Then, ride comfort when the car was caused to run at 100 km/h on a test course having a paved road including straight, curved, and meandering sections was evaluated on a 5 point scale with 5 being the maximum score through sensory evaluation by the test driver. The same test was made by 20 test drivers, and the total of scores by the test drivers was calculated. The results are represented as indexes with the total score of Comparative Example 1 being

regarded as 100. A higher value indicates that the ride comfort during high speed running is better.

The results of the tests are shown in Table 1 and Table 2.

[Table 1]

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Material of band cord | Nylon | PET | Nylon | Nylon | Nylon | Nylon |
| Stress σ1 at 2.5% elongation of band cord (N/tex) | 0.04 | 0.20 | 0.05 | 0.04 | 0.04 | 0.04 |
| Stress σ2 at 5.0% elongation of band cord (N/tex) | 0.07 | 0.40 | 0.08 | 0.10 | 0.07 | 0.07 |
| Number of twists N1 per 100 mm of band cord | 40 | 26 | 30 | 25 | 40 | 40 |
| Total fineness D of band cord (dtex) | 2000 | 2200 | 2000 | 3000 | 2000 | 2000 |
| Twist coefficient Nd of band cord | 179 | 122 | 134 | 137 | 179 | 179 |
| Thermal shrinkage stress σ3 at 100°C of band cord (N/tex) | 0.007 | 0.009 | 0.008 | 0.007 | 0.007 | 0.007 |
| Blending formula for tread rubber | Blending formula 1 | Blending formula 1 | Blending formula 1 | Blending formula 1 | Blending formula 2 | Blending formula 3 |
| Glass transition temperature Tg of tread rubber (°C) | -22 | -22 | -22 | -22 | -16 | -27 |
| Styrene amount S in 100 parts by mass of rubber component of tread rubber (parts by mass) | 29.6 | 29.6 | 29.6 | 29.6 | 29.6 | 16.8 |
| Stress σ2 (N/tex)×styrene amount S (parts by mass) | 2.1 | 11.8 | 2.4 | 3.0 | 2.1 | 1.2 |
| Styrene amount S (parts by mass)/thermal shrinkage stress σ3 (N/tex) | 4229 | 3289 | 3700 | 4229 | 4229 | 2400 |
| Durability (index) | 100 | 110 | 110 | 110 | 100 | 100 |
| Ride comfort (index) | 100 | 114 | 100 | 100 | 104 | 104 |

[Table 2]

| | Ex. 1 | Ex. 2 | Ex. 3 | Ex. 4 | Ex. 5 | Ex. 6 | Ex. 7 |
|---|---|---|---|---|---|---|---|
| Material of band cord | PET | PET | PET | PET | PET | PET | PET |
| Stress σ1 at 2.5% elongation of band cord (N/tex) | 0.06 | 0.10 | 0.09 | 0.12 | 0.14 | 0.13 | 0.15 |
| Stress σ2 at 5.0% elongation of band cord (N/tex) | 0.11 | 0.20 | 0.18 | 0.22 | 0.27 | 0.25 | 0.28 |
| Number of twists N1 per 100 mm of band cord (times) | 40 | 30 | 60 | 60 | 60 | 70 | 80 |

(continued)

| | Ex. 1 | Ex. 2 | Ex. 3 | Ex. 4 | Ex. 5 | Ex. 6 | Ex. 7 |
|---|---|---|---|---|---|---|---|
| Total fineness D of band cord (dtex) | 2200 | 2200 | 2200 | 2200 | 2200 | 2200 | 3800 |
| Twist coefficient Nd of band cord | 188 | 141 | 281 | 281 | 281 | 328 | 493 |
| Thermal shrinkage stress σ3 at 100°C of band cord (N/tex) | 0.007 | 0.007 | 0.007 | 0.012 | 0.023 | 0.021 | 0.025 |
| Blending formula for tread rubber | Blending formula 4 | Blending formula 5 | Blending formula 6 | Blending formula 7 | Blending formula 8 | Blending formula 9 | Blending formula 10 |
| Glass transition temperature Tg of tread rubber (°C) | -19 | -18 | -19 | -18 | -17 | -16 | -15 |
| Styrene amount S in 100 parts by mass of rubber component of tread rubber (parts by mass) | 22.2 | 19.6 | 16.8 | 16.8 | 15.0 | 16.8 | 13.8 |
| Stress σ2 (N/tex) ×styrene amount S (parts by mass) | 2.4 | 3.9 | 3.0 | 3.7 | 4.1 | 4.2 | 3.9 |
| Styrene amount S (parts by mass)/thermal shrinkage stress σ3 (N/tex) | 3171 | 2800 | 2400 | 1400 | 652 | 800 | 552 |
| Durability (index) | 135 | 145 | 140 | 145 | 155 | 150 | 165 |
| Ride comfort (index) | 136 | 136 | 146 | 146 | 166 | 170 | 176 |

Here, blending formulas 1 to 10 for tread rubber shown in Table 1 and Table 2 are as shown in Table 3 and Table 4 below.

[Table 3]

| | Blending formula 1 | Blending formula 2 | Blending formula 3 |
|---|---|---|---|
| NR | 10 | 10 | 10 |
| SBR (Versalis C3737) (Sty37) | 80 | 80 | |
| SBR (Versalis C2525) (Sty25) | | | |
| Modified SBR (Sty28) | | | 60 |
| BR (BR150B) | 30 | 30 | 30 |
| Carbon black (N220) | 10 | 10 | 10 |
| Silica (NIPSII, VN3) | 60 | 60 | 60 |
| Silane coupling agent (Si266) | 4.8 | 4.8 | 4.8 |
| Oil (AH-24) | 25 | 5 | 25 |
| Resin component (SYLVATRAXX 4401) | 5 | 25 | 5 |
| Resin component (TO125) | | | |
| Zinc oxide | 3 | 3 | 3 |

(continued)

| | Blending formula 1 | Blending formula 2 | Blending formula 3 |
|---|---|---|---|
| Wax | 2 | 2 | 2 |
| Antioxidant (6C) | 2 | 2 | 2 |
| Antioxidant (RD) | 1.5 | 1.5 | 1.5 |
| Sulfur | 1.5 | 1.5 | 1.5 |
| Vulcanization accelerator 1 (NS) | 3 | 3 | 3 |
| Vulcanization accelerator 2 (DPG) | 1.5 | 1.5 | 1.5 |

[Table 4]

| | Blending formula 4 | Blending formula 5 | Blending formula 6 | Blending formula 7 | Blending formula 8 | Blending formula 9 | Blending formula 10 |
|---|---|---|---|---|---|---|---|
| NR | 10 | 10 | 10 | 10 | 10 | 10 | 10 |
| SBR (Versalis C3737) (Sty37) | 60 | | | | | | |
| SBR (Versalis C2525) (Sty25) | | | | | 60 | | 55 |
| Modified SBR (Sty28) | | 70 | 60 | 60 | | 60 | |
| BR (BR150B) | 30 | 20 | 30 | 30 | 30 | 30 | 10 |
| Carbon black (N220) | 10 | 10 | 10 | 10 | 10 | 10 | 10 |
| Silica (NIPSII, VN3) | 60 | 60 | 60 | 60 | 60 | 60 | 60 |
| Silane coupling agent (Si266) | 4.8 | 4.8 | 4.8 | 4.8 | 4.8 | 4.8 | 4.8 |
| Oil (AH-24) | 5 | 10 | 5 | 5 | 5 | 5 | |
| Resin component (SYLVATRAXX 4401) | 25 | | 25 | 10 | | | |
| Resin component (TO125) | | 15 | | 15 | 25 | 25 | 30 |
| Zinc oxide | 3 | 3 | 3 | 3 | 3 | 3 | 3 |
| Wax | 2 | 2 | 2 | 2 | 2 | 2 | 2 |
| Antioxidant (6C) | 2 | 2 | 2 | 2 | 2 | 2 | 2 |
| Antioxidant (RD) | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 |
| Vulcanization accelerator 1 (NS) | 3 | 3 | 3 | 3 | 3 | 3 | 3 |
| Vulcanization accelerator 2 (DPG) | 1.5 | 1.5 | 1.5 | 1.5 | 1.5 | 1.5 | 1.5 |

As a result of the tests, the tires of the Examples have better ride comfort and durability after high speed running than those of the Comparative Examples, and also have better combined performance, which is determined by the total

value of each performance, so that it is confirmed that both ride comfort and durability after high speed running can be achieved in the tires of the Examples.

## Claims

1. A tire (1) comprising a tread portion (2), wherein

   the tread portion (2) includes a tread rubber (2A) forming a ground-contact surface (2a), and a band layer (8) disposed inward of the tread rubber (2A) in a tire radial direction,
   the band layer (8) includes at least one band ply (8A) in which a band cord (8a) containing a polyester fiber is arranged,
   the tread rubber (2A) contains styrene and is composed of a rubber composition having a glass transition temperature Tg of not lower than -20°C, **characterised in that** the band cord (8a) has a stress σ1 at 2.5% elongation of not less than 0.05 N/tex and not greater than 0.18 N/tex and a stress σ2 at 5.0% elongation of not less than 0.09 N/tex and not greater than 0.33 N/tex, and
   a styrene amount S in 100 parts by mass of a rubber component of the tread rubber (2A) is not greater than 25 parts by mass,
   wherein each of the stress σ1 at 2.5% elongation and the stress σ2 at 5.0% elongation of the band cord (8a) is a value obtained by dividing the force at 2.5% or 5.0% elongation of the cord taken from the tire (1) by the total fineness of the cord, the test method for these stresses σ1 and σ2 being based on "8.6 Test method for load at constant elongation" in JIS-L1017 "Test methods for chemical fibre tire cords", wherein the total fineness of the cord used in this case is calculated for the cord taken from the tire (1) by a method based on b) of "8.3 Fineness based on corrected weight" in JIS-L1017, and
   wherein the glass transition temperature Tg of the rubber composition is determined by measuring a temperature distribution curve of tanδ under conditions of a frequency of 10 Hz, an initial strain of 10%, an amplitude of ±0.5%, and a temperature increase rate of 2°C/min, wherein a tanδ peak temperature corresponding to the highest tanδ value in the measured temperature distribution curve is regarded as the glass transition temperature Tg, wherein a rubber sample used when the glass transition temperature Tg is measured is taken from the tire (1) after vulcanization such that the longitudinal direction of the sample coincides with the circumferential direction of the tire (1).

2. The tire (1) according to claim 1, wherein the styrene amount (S) in 100 parts by mass of the rubber component of the tread rubber (2A) is not greater than 20 parts by mass.

3. The tire (1) according to claim 1 or 2, wherein the stress σ2 at 5.0% elongation of the band cord (8a) is not less than 0.11 N/tex and not greater than 0.28 N/tex.

4. The tire (1) according to any one of claims 1 to 3, wherein a product (σ2×S) of the stress σ2 at 5.0% elongation (N/tex) of the band cord (8a) and the styrene amount S
   (parts by mass) in 100 parts by mass of the rubber component of the tread rubber (2A) is not less than 2.7 and not greater than 8.0.

5. The tire (1) according to any one of claims 1 to 4, wherein a twist coefficient Nd, of the band cord (8a), which is a value obtained by multiplying a number of twists N2 per 10 mm of cord for the band cord (8a) by a square root of a total fineness D (dtex) of the band cord (8a), is not less than 200.

6. The tire (1) according to any one of claims 1 to 5, wherein the band cord (8a) has a thermal shrinkage stress σ3 at 100°C of not less than 0.01 N/tex, wherein the thermal shrinkage stress σ3 of the band cord (8a) is a value that is measured at 100°C for 2 minutes for the cord taken from the tire (1), in accordance with the test method of ASTM D5591, after the band cord (8a) to be measured is fixed at an initial load of 20 g/cord with a length of 25 cm.

7. The tire (1) according to any one of claims 1 to 6, wherein a value (S/σ3) obtained by dividing the styrene amount S (parts by mass) in 100 parts by mass of the rubber component of the tread rubber (2A) by the thermal shrinkage stress σ3 at 100°C (N/tex) of the band cord (8a) is not greater than 1000, wherein the thermal shrinkage stress σ3 of the band cord (8a) is a value that is measured at 100°C for 2 minutes for the cord taken from the tire (1), in accordance with the test method of ASTM D5591, after the band cord (8a) to be measured is fixed at an initial load of 20 g/cord with a length of 25 cm.

**Patentansprüche**

1. Reifen (1), umfassend einen Laufstreifenabschnitt (2), wobei

der Laufstreifenabschnitt (2) einen Laufstreifenkautschuk (2A), der einen Bodenkontaktoberfläche (2a) bildet, und eine Bandschicht (8) umfasst, die in einer Reifenradialrichtung innerhalb des Laufstreifenkautschuks (2A) angeordnet ist,
die Bandschicht (8) mindestens eine Bandlage (8A) umfasst, in der ein Bandkord (8a) angeordnet ist, der eine Polyesterfaser enthält,
der Laufstreifenkautschuk (2A) Styrol enthält und mit einer Kautschukzusammensetzung aufgebaut ist, die eine Glasübergangstemperatur Tg aufweist, die nicht niedriger als -20°C ist,
**dadurch gekennzeichnet, dass** der Bandkord (8a) eine Spannung $\sigma 1$ bei 2,5% Dehnung von nicht weniger als 0,05 N/tex und nicht mehr als 0,18 N/tex und eine Spannung $\sigma 2$ bei 5,0% Dehnung von nicht weniger als 0,09 N/tex und nicht mehr als 0,33 N/tex aufweist, und
eine Styrolmenge S in 100 Massenteilen einer Kautschuckomponente des Laufstreifenkautschuks (2A) nicht größer ist als 25 Massenteile,
wobei jede von der Spannung $\sigma 1$ bei 2,5% Dehnung und der Spannung $\sigma 2$ bei 5,0% Dehnung des Bandkords (8a) ein Wert ist, der erhalten wird, indem die Kraft bei 2,5% oder 5,0% Dehnung des aus dem Reifen (1) entnommenen Kords durch die Gesamtfeinheit des Kords dividiert wird, wobei das Prüfverfahren für diese Spannungen $\sigma 1$ und $\sigma 2$ auf "8.6 Prüfverfahren für Belastung bei konstanter Dehnung" in JIS-L1017 "Prüfverfahren für Chemiefasern-Reifenkorde" beruht, wobei die Gesamtfeinheit des in diesem Fall verwendeten Kords für den aus dem Reifen (1) entnommenen Kord durch ein Verfahren berechnet wird, das auf b) aus "8.3 Feinheit beruhend auf korrigiertem Gewicht" in JIS-L1017 beruht, und
wobei die Glasübergangstemperatur Tg der Kautschukzusammensetzung bestimmt wird, indem eine Temperaturverteilungskurve von $\tan\delta$ unter Bedingungen einer Frequenz von 10 Hz, einer Anfangsdehnung von 10%, einer Amplitude von $\pm 0{,}5\%$ und einer Temperaturanstiegsrate von 2°C/min gemessen wird, wobei eine tanδ-Peak-Temperatur, die dem höchsten tanδ-Wert in der gemessenen Temperaturverteilungskurve entspricht, als die Glasübergangstemperatur Tg betrachtet wird, wobei eine Kautschukprobe, die verwendet wird, wenn die Glasübergangstemperatur gemessen wird, so aus dem Reifen (1) nach Vulkanisation entnommen wird, dass die Längsrichtung der Probe mit der Umfangsrichtung des Reifens (1) zusammenfällt.

2. Reifen (1) nach Anspruch 1, wobei die Styrolmenge (S) in 100 Massenteilen der Kautschukkomponente des Laufstreifenkautschuks (2A) nicht mehr als 20 Massenteile beträgt.

3. Reifen (1) nach Anspruch 1 oder 2, wobei die Spannung $\sigma 2$ bei 5,0% Dehnung des Bandkords (8a) nicht weniger als 0,11 N/tex und nicht mehr als 0,28 N/tex beträgt.

4. Reifen (1) nach einem der Ansprüche 1 bis 3, wobei ein Produkt ($\sigma 2 \times S$) der Spannung $\sigma 2$ bei 5,0% Dehnung (N/tex) des Bandkords (8a) und der Styrolmenge S (Massenteile) in 100 Massenteilen der Kautschuckomponente des Laufstreifenkautschuks (2A) nicht weniger als 2,7 und nicht mehr als 8,0 beträgt.

5. Reifen (1) nach einem der Ansprüche 1 bis 4, wobei ein Drehungskoeffizient Nd des Bandkords (8a), welcher ein Wert ist, der erhalten wird, indem eine Anzahl an Verdrehungen N2 pro 10 mm Kord für den Bandkord (8a) mit einer Quadratwurzel einer Gesamtfeinheit D (dtex) des Bandkords (8a) multipliziert wird, nicht weniger als 200 beträgt.

6. Reifen (1) nach einem der Ansprüche 1 bis 5, wobei der Bandkord (8a) eine thermische Schrumpfspannung $\sigma 3$ bei 100°C von nicht weniger als 0,01 N/tex aufweist, wobei die thermische Schrumpfspannung $\sigma 3$ des Bandkords (8a) ein Wert ist, der bei 100°C für 2 Minuten für den aus dem Reifen (1) entnommenen Kord, gemäß dem Prüfverfahren von ASTM D5591, gemessen wird, nachdem der zu messende Bandkord (8a) bei einer anfänglichen Belastung von 20 g/Kord mit einer Länge von 25 cm fixiert wurde.

7. Reifen (1) nach einem der Ansprüche 1 bis 6, wobei ein Wert ($S/\sigma 3$), der erhalten wird, indem die Styrolmenge S (Massenteile) in 100 Massenteilen des Laufstreifenkautschuks (2A) durch die thermische Schrumpfspannung $\sigma 3$ bei 100°C (N/tex) des Bandkords (8a) dividiert wird, nicht mehr als 1000 beträgt, wobei die thermische Schrumpfspannung $\sigma 3$ des Bandkords (8a) ein Wert ist, der bei 100°C für 2 Minuten für den aus dem Reifen (1) entnommenen Kord, gemäß dem Prüfverfahren von ASTM D5591, gemessen wird, nachdem der zu messende Bandkord (8a) bei einer anfänglichen Belastung von 20 g/Kord mit einer Länge von 25 cm fixiert wurde.

## Revendications

1. Pneu (1) comprenant une partie bande de roulement (2),

   la partie bande de roulement (2) comportant un caoutchouc de bande de roulement (2A) formant une surface de contact avec le sol (2a), et une couche de bande (8) disposée vers l'intérieur du caoutchouc de bande de roulement (2A) dans une direction radiale du pneu,
   la couche de bande (8) comporte au moins une nappe de bande (8A) dans laquelle est disposé un câble de bande (8a) contenant une fibre polyester, le caoutchouc de bande de roulement (2A) contient du styrène et est composé d'une composition de caoutchouc ayant une température de transition vitreuse Tg non inférieure à -20 °C,
   **caractérisé en ce que** le câble de bande (8a) a une contrainte σ1 à 2,5 % d'élongation non inférieure à 0,05 N/tex et non supérieure à 0,18 N/tex et une contrainte σ2 à 5,0 % d'élongation non inférieure à 0,09 N/tex et non supérieure à 0,33 N/tex, et une teneur en styrène dans 100 parties en masse d'un composant de caoutchouc du caoutchouc de bande de roulement (2A) est non supérieure à 25 parties en masse,
   dans lequel chacune parmi la contrainte σ1 à 2,5 % d'élongation et la contrainte σ2 à 5,0 % d'élongation du câble de bande (8a) est une valeur obtenue en divisant la force à 2,5 % ou à 5,0 % d'élongation du câble prise à partir du pneu par la finesse totale du câble, la méthode d'essai pour ces contraintes σ1 et σ2 étant basée sur « 8.6 Méthode d'essai pour la charge à élongation constante dans la norme JIS-L1017 « Méthode d'essais pour câbles de pneu en fibres chimiques », dans lequel la finesse totale du câble utilisé dans ce cas est calculée pour le câble pris à partir du pneu (1) par une méthode basée sur b) de « 8.3 Finesse basée sur le poids corrigé dans JIS-L1017, et
   dans lequel la température de transition vitreuse Tg de la composition de caoutchouc est déterminée en mesurant une courbe de distribution de la température et de la tanδ dans des conditions avec une fréquence de 10 Hz, une contrainte initiale de 10 %, une amplitude de ± 0,5 %, et un gradient de température de 2 °C/min, dans lequel une température de pic de tanδ correspondant à la valeur de tanδ la plus élevée dans la courbe de distribution de la température mesurée est considérée comme étant la température de transition vitreuse Tg, dans lequel un échantillon de caoutchouc utilisé lorsque la température de transition vitreuse Tg est mesurée est prélevé à partir du pneu (1) après la vulcanisation de sorte que la direction longitudinale de l'échantillon coïncide avec la direction circonférentielle du pneu (1).

2. Pneu (1) selon la revendication 1, dans lequel la teneur en styrène (S) dans 100 parties en masse de composant de caoutchouc du caoutchouc de bande de roulement (2A) est non supérieure à 20 parties en masse.

3. Pneu (1) selon la revendication 1 ou la revendication 2, dans lequel la contrainte σ2 à 5,0 % d'élongation du câble de bande (8a) n'est pas inférieure à 0,1 N/tex et non supérieure à 0,28 N/tex.

4. Pneu (1) selon l'une quelconque des revendications 1 à 3, dans lequel le produit (σ2 × S) de la contrainte σ2 à 5,0 % d'élongation (N/tex) du câble de bande (8a) et de la teneur en styrène S (parties en masse) dans 100 parties en masse de composant de caoutchouc du caoutchouc de bande de roulement (2A) n'est pas inférieur à 2,7 et non supérieur à 8,0.

5. Pneu (1) selon l'une quelconque des revendications 1 à 4, dans lequel le coefficient de torsion Nd du câble de bande (8a), qui est une valeur obtenue en multipliant un nombre de torsions N2 par 10 mm de câble pour le câble de bande (8a) par la racine carrée de la finesse totale D (dtex) du câble de bande (8a), n'est pas inférieur à 200.

6. Pneu (1) selon l'une quelconque des revendications 1 à 5, dans lequel le câble de bande (8a) a une contrainte de rétraction thermique σ3 à 100 °C non inférieure à 0,01 N/tex, dans lequel la contrainte de rétraction thermique σ3 du câble de bande (8a) est une valeur qui est mesurée à 100 °C pendant 2 minutes pour le câble prélevé du pneu (1), en accord avec la méthode d'essai ASTM D5591, après que le câble de bande (8a) à mesurer ait été réglé avec une charge initiale de 20 g/câble avec une longueur de 25 cm.

7. Pneu (1) selon l'une quelconque des revendications 1 à 6, dans lequel une valeur (S/σ3) obtenue en divisant la teneur en styrène S (parties en masse) dans 100 parties en masse de composant de caoutchouc du caoutchouc de bande de roulement (2A) par le contrainte de rétraction thermique σ3 à 100 °C (N/tex) du câble de bande (8a) est non supérieure à 1000, dans lequel la contrainte de rétraction thermique σ3 du câble de bande (8a) est une valeur qui est mesurée à 100 °C pendant 2 minutes pour le câble prélevé du pneu (1), en accord avec la méthode d'essai ASTM D5591, après que le câble de bande (8a) devant être mesuré ait été réglé avec une charge initiale

de 20 g/câble avec une longueur de 25 cm.

Fig. 1

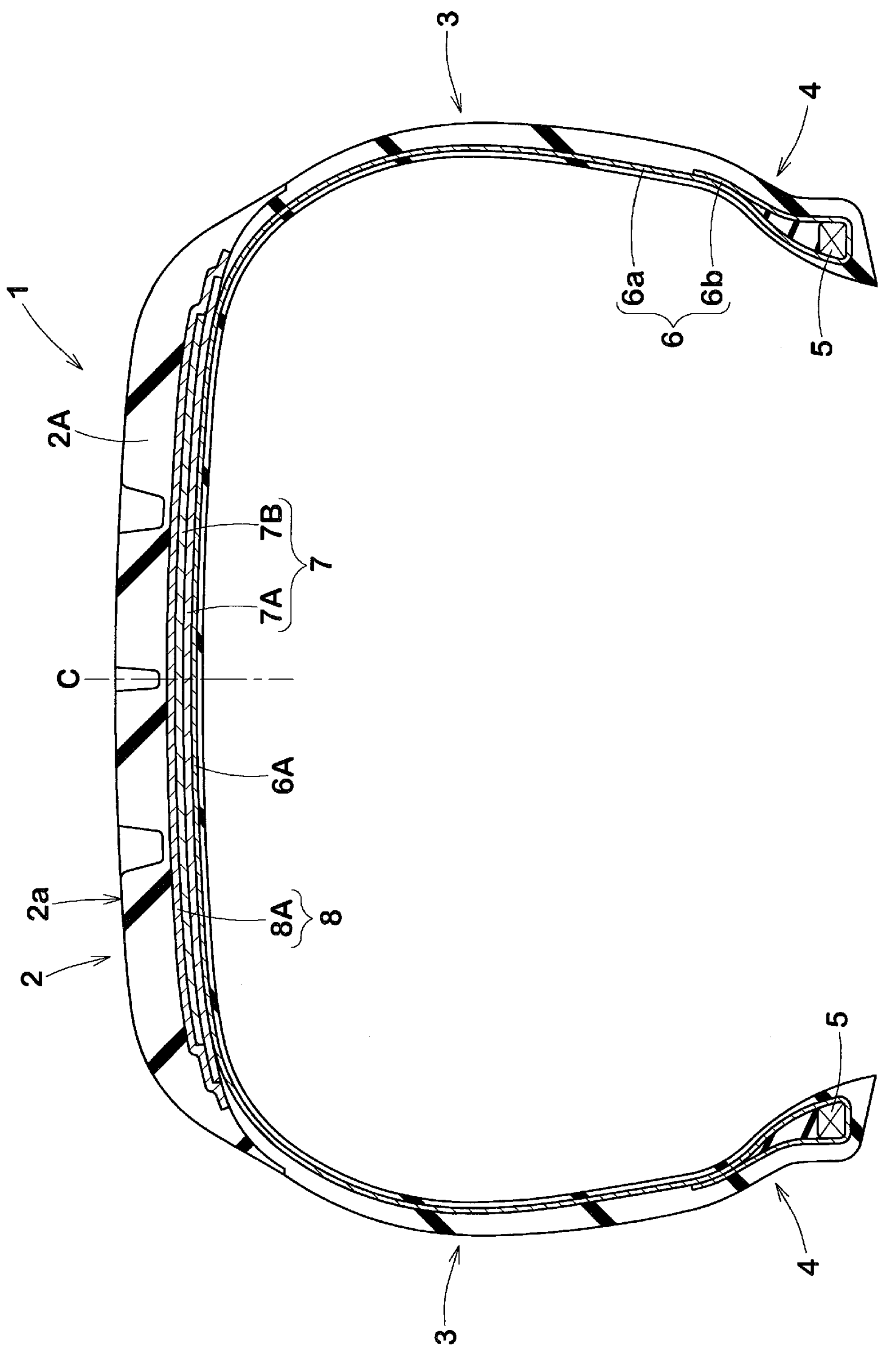

Fig. 2

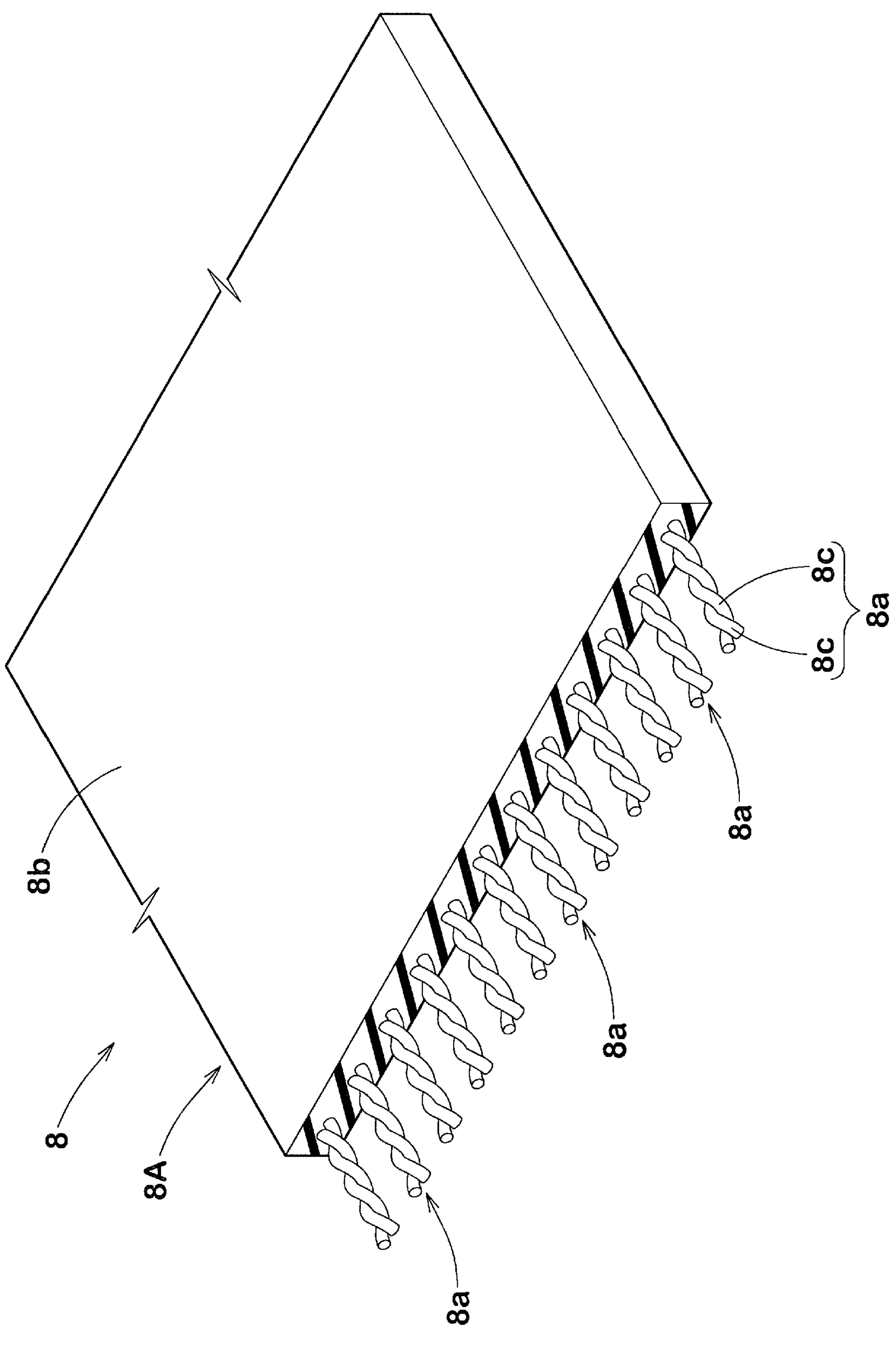

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019178294 A
- JP 2008050408 A
- US 20200369086 A1
- JP 2007177360 A